# EUROPÄISCHE PATENTSCHRIFT

(11) **EP 1 064 142 B1**
(45) Veröffentlichungstag und Bekanntmachung des Hinweises auf die Patenterteilung: **10.10.2001**
(21) Anmeldenummer: 99915642.5
(22) Anmeldetag: 17.03.1999
(51) Int. Cl.: B29C 59/02

(54) **VERFAHREN ZUR HERSTELLUNG EINES OBERFLÄCHENSTRUKTURIERTEN, FOLIENARTIGEN HALBZEUGS AUS EINEM THERMOPLASTEN, VORRICHTUNG ZUR DURCHFÜHRUNG DES VERFAHREN, SOWIE FOLIENHALBZEUG ODER PRODUKT**
METHOD FOR PRODUCING SURFACE-STRUCTURED, FILM-LIKE SEMI-FINISHED PRODUCT FROM A THERMOPLASTIC, APPARATUS FOR CARRYING OUT THE METHOD AND SEMI-FINISHED FILM PRODUCT OR PRODUCT
PROCEDE PERMETTANT DE FABRIQUER UN PRODUIT SEMI-FINI DE TYPE FEUILLE, A SURFACE STRUCTUREE, A PARTIR D'UN THERMOPLASTIQUE, DISPOSITIF POUR REALISATION DE CE PROCEDE ET PRODUIT DE FILM SEMI-FINI OU PRODUIT

(30) Priorität: 19.03.1998 DE 19812097
(43) Veröffentlichungstag der Anmeldung: 03.01.2001
(73) Patentinhaber: Advanced Design Concepts GmbH, 30156 Hannover (DE)
(72) Erfinder: Wagner, Werner, 07409 Alcudia (ES)
(74) Vertreter: Hoffmeister, Helmut, Dr. Dipl.-Phys.
(86) Internationale Anmeldenummer: EP9901756
(87) Internationale Veröffentlichungsnummer: WO9947339

(56) Entgegenhaltungen:
- EP-A- 0 057 590
- EP-A- 0 199 126
- DE-C- 19 524 076
- FR-A- 2 270 361
- US-A- 1 881 337
- US-A- 3 719 537
- US-A- 3 950 582
- US-A- 4 124 428
- US-A- 4 308 649
- US-A- 5 066 348

## Beschreibung

Die Erfindung betrifft ein Verfahren zur Herstellung eines oberflächenstrukturierten, folienartigen Halbzeugs aus einem Thermoplasten dem Oberbegriff des Anspruch 1. Die Erfindung bezieht sich ferner auf eine Vorrichtung zur Durchführung des Verfahrens gemäß dem Oberbegriff des Anspruchs 11 sowie auf ein Folienhalbzeug oder Produkt, insbesondere Hygieneprodukt, mit Haarfasern.

Aus der EP 0 057 590 A2 geht eine Oberfläche hervor, die eine Noppung aufweist. Die Noppung wird durch ein Einfrieren des Materials, Bearbeiten mittels einer Bürste zum Erzeugen der Noppung und anschließendem Auftauen der Oberfläche erzeugt.

Aus der EP 0 199 126 A2 ist eine Kunststoffoberfläche bekannt, die eine zerfaserte Oberfläche hat. Die noch unzerfaserte Kunststoffoberfläche wird in einen viskoelastischen oder plastischen Zustand gebracht, so daß Kunststoffanteile herausgezogen werden können. Dazu wird eine Matrize in Kontakt mit der Kunststoffoberfläche gebracht und die Matrize von der Oberfläche weggezogen, so daß eine Zerfaserung eintritt.

Aus der den nächstkommenden Stand der Technik bildenden Patentschrift DE 195 24 076 C1 ist bekannt, oberflächenstrukturierte, folienartige Halbzeuge aus einem Thermoplasten dadurch herzustellen, daß das thermoplastische Kunststoffmaterial in geschmolzenem Zustand auf eine zylindrische, drehbare und in ihrer Temperatur einstellbare Walzenoberfläche extrudiert wird, wobei das thermoplastische Kunststoffmaterial die Oberflächenstruktur der Walzenoberfläche satt kontaktiert. Das geschmolzene thermoplastische Kunststoffmaterial wird - noch auf der Oberfläche liegend - durch Abkühlung zum Erstarren gebracht. Nach dem Erstarren wird das Kunststoffmaterial von der Walzenoberfläche abgezogen. Hierbei ergibt sich entsprechend den vorhandenen feinen Kavitäten eine entsprechende noppenartige oder florartige Oberfläche des entstandenen folienartigen Halbzeugs.

Ferner ist bekannt (US-PS 1 881 337), eine Gummifolie, die mit einer Faser-Beimischung gefüllt ist, in eine Matte mit einer faserigen Oberfläche zu überführen, indem zunächst die Gummi-Oberfläche reliefiert wird, so daß sich hochliegende und tiefliegende Bereiche bilden. Die hochstehenden Bereiche werden beispielsweise durch Bürsten bearbeitet, wobei ein Teil des Gummis abgetragen und die Faserstruktur quasi herausgeschält wird. Bei den tiefer liegenden Bereichen wird eine solche Abtragung nicht erzielt. Das Verfahren geht daher davon aus, daß einer elastischen Grundmasse zunächst Fasern zugemischt werden müssen, damit nach Abtragen einer Oberflächen-Schicht wiederum eine faserige Oberfläche entsteht.

Es ist weiterhin bekannt, Kunststoffolien zu prägen oder im Tiefziehverfahren zu verformen. Mit diesen Verfahren ist es jedoch schwierig, die Oberseite einer Kunststoffolie mit langen dünnen Haaren zu besetzen, da sich aus entsprechend tiefen Kavitäten eines Präge- oder Tiefziehwerkzeuges die Folienhärchen nur sehr schwer unbeschädigt herausziehen lassen. Erfahrungsgemäß bleibt immer ein gewisser Prozentsatz an Kunststoff-Folienhärchen in den Kavitäten hängen, so daß diese beim nächsten Arbeitsgang für eine Formung ausfallen und damit nach kurzer Zeit die Form und damit das entstandene Produkt nicht mehr brauchbar sind.

Dagegen sind Noppen oder Vorsprünge, bei denen der Durchmesser im Mittel genauso groß oder bis zur Hälfte so groß ist wie die Länge des Vorsprungs in derartigen Matrix-Gußverfahren herzustellen; Analoges gilt für das Tiefziehen.

Es stellt sich demnach die Aufgabe, aus einem Thermoplasten ohne Zumischung von heterogenen Beimischungen, wie Fasern, im Gieß- oder Auflegverfahren ein Halbzeug herzustellen, das nicht nur eine noppenartige Struktur hat, sondern eine wesentlich feinfaserige bis haarfaserähnliche, velourartige Oberfläche aufweist.

Diese Aufgabe wird mit Hilfe eines eingangs genannten Verfahrens gelöst, das dadurch gekennzeichnet ist, daß die den Flor bildenden Vorsprünge durch Kämmen, Bürsten, Rakeln und/oder Scherquetschen gereckt werden und dabei im Mittel die Länge der Vorsprünge des Flors um wenigstens das Zweifache der Ursprungslänge vergrößert wird und ein auf wenigstens einer Seite faserartig strukturiertes Halbzeug entsteht, bei dem die Vorsprünge zu Haarfasern gelängt sind.

Diese Aufgabe wird ferner erfindungsgemäß durch die Vorrichtung nach Anspruch 11 und durch das Folienhalbzeug oder Produkt nach Anspruch 14 gelöst.

Zweckmäßige Weiterbildungen der Erfindung sind Gegenstand der betreffenden abhängigen Ansprüche.

Im Gegensatz zum Rauhen, wie es aus der Textilindustrie bekannt ist, bei dem einzelne Fasern aus der gewebten Struktur herausgezogen werden, verbleibt im vorliegenden Fall die durchgehende Fläche der Kunststoffolie im wesentlichen völlig intakt. Das Behandeln mit entsprechenden harten Bürsten, wie sie teilweise auch in der Textilindustrie üblich sind, ergreift die Noppen und längt sie wesentlich, so daß sich nach kurzer Bearbeitungszeit eine haarartige Struktur auf der einen Seite des Halbzeugs ergibt.

Es hat sich überraschenderweise gezeigt, daß ein Längen der bereits vorhandenen Vorsprünge eintritt, während beim Aufkratzen einer glatten Folie dieser Effekt nicht eintritt.

Die als Arbeitsgänge genannten Vorgänge des Kämmens, Bürstens, Rakelns und/oder Scherquetschens haben alle zum Ziel, die über die übrige Oberfläche ragenden Vorsprünge, Noppen, Stifte und dergleichen aus dem Material der übrigen Kunststoffolie zu ergreifen und zu strecken, so daß diese gelängt werden, Wie die Erfahrung zeigt, bildet sich nach kurzer Zeit eine velourartige, aus den gelängten Vorsprüngen gebildeten Haaren bestehende Oberfläche aus.

Je nach der Beschaffenheit der Bürsten und der Zeitdauer der Bearbeitung ergeben sich im Mittel längere oder kürze Haarstrukturen. Auch spielt die Temperatur, bei der das Kämmen, Bürsten, Rakeln und/oder Scherquetschen erfolgt, eine beachtliche Rolle. Die Behandlungstemperatur kann bei Zimmertemperatur, also 20°C liegen, sie kann vorzugsweise aber auch erhöht werden bis zu 120°C, sollte jedoch unterhalb der Schmelztemperatur des Halbzeuges liegen.

Die Länge der Vorsprünge und Noppen vor dem Recken und Längen liegt zwischen 80 und 140 µm und bei einem Faserdurchmesser von wenigstens 40 µm. Die Besetzungsdichte an Vorsprüngen bzw. Haarfasern liegt etwa zwischen 3.000 und 20.000 Stück pro cm².

Für die Vorgänge des Kämmens, Bürstens, Rakelns und Scherquetschens haben sich an sich bekannte Vorrichtungen aus der Textiltechnik als geeignet erwiesen. So kann beispielsweise das Kämmen oder Bürsten mit Hilfe einer oder mehrerer Kratzrauhwalzen geschehen (vgl. hierzu HAMANN/HOFF, Musterhandbuch der Webwarenkunde, 2. Auflage, Franz Steiner Verlag, Wiesbaden, 1952). Vorteilhaft hat sich auch bei den genannten Verfahren das Arbeiten mit wenigstens einer Bürstenwalze und einer zu dieser nachgeschalteten Kämmwalze erwiesen.

Die Bearbeitung kann vorzugsweise in Bezug auf ein genopptes Kunststoffmaterial geschehen, das auf der Oberfläche einer Trommel fixiert ist. Es ist aber auch möglich, das Kunststoffmaterial auf einer ebenen Oberfläche zu fixieren und dort zu bearbeiten.

Die auf das Kunststoffmaterial wirkenden Zug-, Druck- und Scherkräfte sind erheblich. Es kommt in vielen Fällen zu einer inhärenten Erwärmung. So kann es auch vorteilhaft sein, daß die gestreckten Haarfasern durch Bürsten mit einer Weichbürste wieder aufgelockert werden, nachdem das eigentliche Strecken der Vorsprünge beendet ist.

Vorteilhaft ist auch auch, vor dem Kämmen, Bürsten, Rakeln und/oder Scherquetschen die Vorsprünge mit einem Aviviermittel zu behandeln.

Als geeignete Kunststoffe für das Verfahren haben sich Thermoplasten aus der Gruppe Polyolefine, Polyester, Polyurethane, Polyätherester, Polyamide, Polyesteramide, sowie Mischungen oder Copolymerisate daraus erwiesen.

Wesentlich ist, daß eine Streckung möglich ist und daß diese Streckung bleibend ist.

Eine Vorrichtung zur Durchführung des Verfahrens verwendet eine in ihrer Temperatur einstellbare Matrixoberfläche, die eine mit zahlreichen Kavitäten und gegebenenfalls anderen Oberflächenformen besetzte Struktur aufweist. Ausgegangen wird von einer Noppen- oder Vorsprungstruktur, bei der die Länge etwa 80 bis 140 µm bei einem Stamm- oder Faserdurchmesser von 40 µm etwa beträgt. Hier kann abgewichen werden, je nach Dichte, Faserhöhe des Flors und ähnlichen Parametern. .

Die Vorrichtung ist dadurch gekennzeichnet, daß der Vorrichtung mit der Matrixoberfläche, z.B. der Walze, eine mit einer Arbeitsoberfläche versehene Vorrichtung nachgeschaltet ist, auf der das Halbzeug derart fixierbar ist, daß die mit dem Faserflor zu bedeckende Seite des Halbzeugs freiliegt, und daß zum Kämmen, Bürsten, Rakeln und/oder Scherquetschen dienende Arbeitsvorrichtungen, wie Rauhkratzen, Kämmwalzen, Rakeln, Quetschwalzen und dergleichen im Bereich der Arbeitsoberfläche angeordnet sind, mit denen die Haarfasern durch Strecken herstellbar sind.

Vorzugsweise ist die Arbeitsoberfläche zylindrisch und auf der Außenseite einer Trommel angeordnet, wobei die Trommel eine mit zahlreichen Öffnungen versehene Vakuumtrommel ist. Das Heran- und Abführen des Halbzeuges an die Trommel werden mit Hilfe einer Umlenkwalze und einer Abzugswalze vollführt.

Über den Trommelumfang verteilt und in Arbeitsrichtung zwischen Umlenkwalze und Abzugswalze angeordnet sind wenigstens eine Bürstenwalze und eine Kämmwalze.

Weiterhin kann der Effekt der Längung dadurch verstärkt werden, daß die Zahl der Walzen erhöht wird. So wird vorgeschlagen, daß zwischen Umlenkwalze und Abzugswalze eine erste Bürstenwalze, eine erste Kämmwalze, eine zweite Bürstenwalze, eine zweite Kämmwalze und eine dritte Bürstenwalze angeordnet sind.

Als Bürstenwalzen können rotierende, mit Stahl- oder Kunststoffborsten oder -zungen besetzte Walzen, gegebenenfalls auch Strichwalzen, mit denen ein Strich der Fasern in bestimmter Richtung vorgenommen werden kann, eingesetzt werden.

Entsprechend den Ansprüchen 14 bis 18 ergeben sich bestimmte Folienhalbzeuge, oder Produkte, insbesondere Hygieneprodukte, die nachfolgend anhand von Beispielen erläutert werden.

Die Beschreibung erfolgt anhand der Zeichnung, deren Figuren im einzelnen zeigen:
- Fig.1: in schematischer Seitenansicht eine Vorrichtung zur Herstellung eines thermoplastischen Halbzeugs mit Hilfe einer Trommel;
- Fig. 2: ein Herstellungsverfahren mit einer flach liegenden Halbzeug-Anordnung;
- Fig. 3: einen Schnitt durch eine Halbzeug-Schichtung gemäß einer vorzugsweisen Ausführungsform.

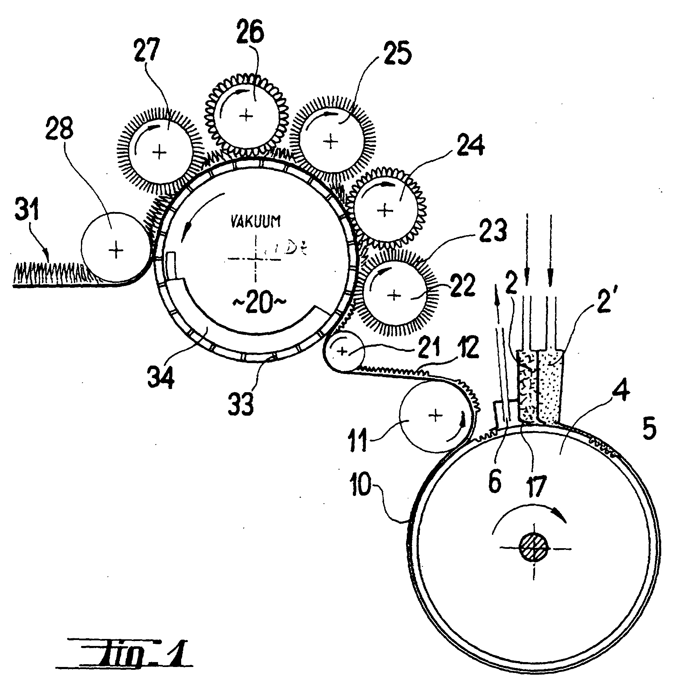

Fig. 1 zeigt eine Vorrichtung zur Herstellung eines folienartigen Halbzeugs in verschiedenen Stufen. Im Ausführungsbeispiel wird zunächst ein zweischichtiges Zwischenerzeugnis mit einer Noppenstruktur aus Polyethylen erzeugt.

Aus zwei Einschneckenextrudern (nicht dargestellt) wird aufgeschmolzenes und homogenisiertes Material in zwei Extrudermündungen 2 bzw. 2' eingespeist. Es wird dabei in den Extrudern ein Kompressionsverhältnis von 1:2,5 und eine Schneckentemperatur von 250°C eingehalten. Die beiden Polyethylen-Schmelzen 3,3' werden unter konstantem Druck den Austragsdüsen mit den Mündungen 2,2' und auf eine auf 120°C erwärmte Matrixwalze 4 aufgebracht. Die drehbare Matrixwalze 4, die mit einer negativ strukturierten Matrix 5 versehen ist, besitzt zahlreiche feine Kavitäten in Form von Sacklöchern.

Die Matrixwalze wird zunächst auf eine Oberflächentemperatur von 120°C gehalten. Die Austrittsfront aus der ersten Austragsdüse 2 wird mit 17 bezeichnet. Die Konstruktion dieser Walze entspricht im wesentlichen derjenigen, die in der deutschen Patentschrift 195 24 076 beschrieben ist.

Vor den beiden Austragsdüsen 2, 2' ist eine über die gesamte Walzenbreite reichende Vakuumkammer 6 angeordnet. Die Vakuumkammer 6 endet mit entsprechenden Schleiflippen unter Kontakt an der Walzenoberfläche, so daß mittels einer (nicht dargestellten) Vakuumpumpe ein Vakuum sich bis zur Walzenoberfläche ausbreitet und nicht durch seitlich hereinströmende Luft wesentlich gestört wird. Der Unterdruck ist unmittelbar vor der Extrudermündung 2 mit 0,25 bis 0,5 bar zu bemessen.

Das sich ausbildende relativ hohe Vakuum bewirkt, daß die Walzenoberfläche mit der darauf befindlichen Matrix 5 bereichsweise von außen her einem Unterdruck ausgesetzt wird, der unmittelbar vor der Austrittsfront 17 an der Mündung 2 sein Maximum hat, so daß die zu der Matrix 5 gehörenden Kavitäten praktisch luftleer sind, wenn die Austrittsfront 17 sie erreicht. Die Kavitäten werden dementsprechend völlig von thermoplastischem Schmelze 3 ausgefüllt.

Bei dem unmittelbar in die Matrix 5 eintretenden Kunststoff handelt es sich um ein LLDP-Polymer mit mittlerem Molekülgewicht mit einem Schmelzindex von 18 (2,16 kg/190°C). Die zweite, auf der ersten und damit nicht unmittelbar auf der Matrixwalze 4 liegende Schicht besteht aus einem Polyethylen mit geringerer Verformbarkeit und höherer Festigkeit.

Das Evakuieren der Kavitäten kann auch von der Innenseite der Walze 4 erfolgen, wenn hier ein Vakuum angelegt wird und die Kavitäten nicht als Sacklöcher, wie zunächst beschrieben, sondern als durchgehende Bohrungen durch den Mantel der Matrixwalze hindurch gebohrt sind.

Angestrebt wird in beiden Fällen eine Kavitätentiefe von 100 bis 300 µm und ein Kavitätendurchmesser von 40 bis 80 µm. Die Fülltiefe liegt vorzugsweise zwischen 95 und 50% der Gesamttiefe. Bei geringeren Tiefen kann auch ohne Vakuum erarbeitet werden. Hier wird vorzugsweise mit einem Andruck auf das Kunststoffmaterial gearbeitet.

Das verformte Kunststoffmaterial wird durch Abkühlen, beispielsweise durch ein Wasserbad oder durch Kühlluft, zum Abkühlen und Erstarren gebracht. Auf der mit der Matrix 5 in Kontakt gebrachten Seite nimmt demnach das Material die entsprechende Flächenstruktur an.

Nach dem Erstarren wird das Kunststoffmaterial von der Oberfläche der Walze abgezogen und als Zwischenerzeugnis 10 weiterverarbeitet. Das Abziehen von der Matrixwalze erfolgt mittels einer Abzugswalze 11. Mit der strukturierten Oberfläche nach außen wandert das Zwischenerzeugnis gegen eine weitere rotierende Trommel 20, die mit einer Temperatur von etwa 40 bis 80° C beheizt ist. In diesem Zustand hat das Zwischenerzeugnis, das von der Matrixwalze 4 abgezogen wird, einen auf der Oberfläche liegenden, wenig ausgeprägten Flor 12, der von zahlreichen Noppen und Vorsprüngen gebildet ist. Die Höhe des Flors, gemessen von der Oberseite der Folie aus, beträgt etwa 80 bis 140 µm und besitzt einen Durchmesser etwa von 40 bis 80 µm. Es handelt sich also um relativ kompakte und nicht als typische Fasern oder Haare ausgeprägte Vorsprünge.

Über eine Anpreßwalze 21 wird das Zwischenerzeugnis 10 gegen die Mantelfläche der rotierenden Trommel 20 geführt und dort mittels Vakuum fixiert. Im Verlauf der sukzessiv durchlaufenen Arbeitsstationen wird zunächst das Zwischenerzeugnis von einer ersten Rauhwalze 22 bearbeitet. Die Rauhwalze 22 ist mit Metallkratzen 23 besetzt, die zur Erreichung einer federnden Wirkung eine knieförmige Abbiegung aufweisen. Ihre Länge beträgt etwa 5 mm bei einem Walzendurchmesser von 100 mm. Die Kratzen 23 erreichen durch Ergreifen und entsprechendes Längen der Noppen und Vorsprünge eine Streckung derselben um das Zwei- bis Zwanzigfache. Aus den relativ "pummeligen" Noppenvorsprüngen werden dann faserartige, gestreckte Gebilde, so daß auf der bearbeiteten Seite des Zwischenerzeugnisses eine faserartig strukturierte Oberfläche entsteht, bei der die Vorsprünge zu Haarfasern gelängt sind, die jedoch im Mittel noch nicht die endgültige Länge erreicht haben.

Die weitere Bearbeitung des Zwischenerzeugnisses erfolgt in mehreren Stufen. An die Rauhwalze 22 schließt sich eine Kämmwalze 24 an, mit der das hochgerissene und schon zu längeren Haarfasern gelängte Material gekämmt und in eine bestimmte Richtung gelegt wird. Anschließend erfolgt durch eine zweite Rauhwalze 25, die ähnlich aufgebaut ist wie die Rauhwalze 22 ein weiteres Längen und Strecken der Vorsprünge, Noppen und Haarfasern. Es schließt sich wiederum eine Kämmwalze 26 an. Auf diese folgt eine weitere Rauhwalze 27. Am Schluß ergibt sich ein sehr langfaseriges, fast vliesartiges Gebilde, bei. dem jedoch nur die Oberfläche entsprechend behaart ist, ohne daß, wie beim Rauhen von Textilien, das Grundgewebe angegriffen ist. Über eine weitere Umlenkwalze 28 wird das nun fertige Halbzeug abgezogen und einem Vorratsbehälter oder einer Schneidstation zugeführt.

Anstelle der Rauhbürsten 22 können auch andere Bürsten oder Kratzen verwendet werden, mit denen die Vorsprünge gelängt und gestreckt werden können. Wesentlich ist, daß die anfänglich vorhandene relativ flache Struktur durch das Bürsten oder durch ein Scherquetschen gereckt wird, wobei im Mittel die Länge der Vorsprünge des Flor um wenigstens das Zweifache der Ursprungslänge vergrößert wird. Im allgemeinen werden wesentlich höhere Werte erreicht, d.h. die Vorsprünge werden um mehr als das Zehnfache gestreckt.

Um das Zwischenerzeugnis auf der Mantelfläche der Trommel 20 u halten, ist im Inneren der Trommel 20 ein Vakuum aufgebaut. Durch entsprechende Perforationen 33 wird das flexible Zwischenerzeugnis an die Mantelfläche gezogen. Außerhalb der Bearbeitungszone, die durch die Bearbeitungsbereiche der beiden Rauhwalzen 23 und 27 definiert wird, werden die Perforationen 33 abgedeckt durch eine Blende 34, so daß kurz nach Beginn der Blende das Material leicht und ohne Beschädigungen abgezogen werden kann.

Die Bearbeitung auf dem Mantel der Trommel 20 erfolgt vorzugsweise oberhalb der Zimmertemperatur, beispielsweise zwischen 40 und 120° C, jedoch unterhalb der Schmelztemperatur des Halbzeugs. Die untere (zunächst obere) Lage des Zwischenerzeugnisses, die etwas härter ausgebildet ist, wird durch die Läng- und Reckvorgänge nicht berührt oder beschädigt und bildet daher ein ausgezeichnetes Substrat für eine Folie, die als Halbzeug 31 hergestellt wird.

Als Thermoplasten eignen sich Polyolefine, Polyester, Polyvinylalkohole, Polyurethane, Polyäther, Polyamide, Polyesteramide sowie Mischungen oder Copolymerisate daraus, wobei bei Mehrschichtigkeit auch zwischen den Materialien gewechselt werden kann.

Dem Fachmann steht ein breites Spektrum an Kunststoffen entsprechend den angestrebten Verwendungszwecken zur Verfügung. Insbesondere für Hygieneartikel wird man chemisch neutrale Polyolefine wählen, die entsprechend auf bestimmte Schmelztemperaturen und Festigkeiten eingestellt sind.

Zusätzlich zu der Faserausbildung ist es auch noch möglich, die Folie zu perforieren oder auf ein weiteres Substrat aufzukaschieren. Es soll auch nicht ausgeschlossen werden, daß die Folie auf ihrer Rückseite mit einem Textil oder Vlies versehen wird.

In Variation zu Fig. 1 kann so vorgegangen werden, daß von vornherein eine fertig coextrudierte Mono- oder Mehrschichtfolie eingesetzt wird, deren mit einer Matrixwalze 4 in Kontakt kommende Schicht so verformbar-flüssig im Schmelzzustand wird, daß sie auf einer entsprechenden Matrix 5 unter Zuhilfenahme eines Vakuums in entsprechende Kavitäten eindringt und dort die Noppen- und Vorsprungstruktur ausbildet, die für das Zwischenerzeugnis 10 nach verlassen der Matrixoberfläche charakteristisch ist. Anstelle der Extrudermündungen 2,2' treten dann entsprechende Andrückwalzen (nicht dargestellt), die ein herangeführtes Folienmaterial an die Matrixwalze andrücken. Nach der Verformung zu einem Zwischenerzeugnis erfolgt dann die Bearbeitung der Oberfläche wie bereit anhand der Figur 1 beschrieben.

Man geht also aus von einer mehrschichtigen Folie, die unter Verwendung eines Mehrschicht-Extrusionsverfahrens hergestellt ist. Dabei besteht vorzugsweise die Rückseite der Folie aus einem zähen, mechanisch relativ hoch belastbaren Polymeren, z.B. mit einer MFI von etwa 2 bis 3 in einer Dicke von 20 bis 50 µm. Die Rückseite selbst kann mehrschichtig sein. Die Schicht kann auch gefüllt sein, so daß sich durch Verstrecken eine Mikroporösität ergibt. Die Oberseite dagegen, die später eine Velourschicht ergeben soll, wird unter Verwendung eines Polymeren mit einem MFI von 18 bis 30 und in einer Schichtdicke von 20 bis 60 µm hergestellt. Die Rezeptur der Oberseite soll ein leichtes Fließen und eine leichte Umformbarkeit ergeben.

Durch Verwendung einer Mehrschichtfolie lassen sich gut an der Oberfläche verformbare Folien vorlegen; die zähe Rückenschicht ist mit den für die Weiterverarbeitung erforderlichen Eigenschaften ausgestattet. Das unterschiedliche Verformungsverhalten ist besonders von Bedeutung, um die Eindringtiefe in die Kavitäten des Umformwerkzeuges zu bestimmen und zu steuern.

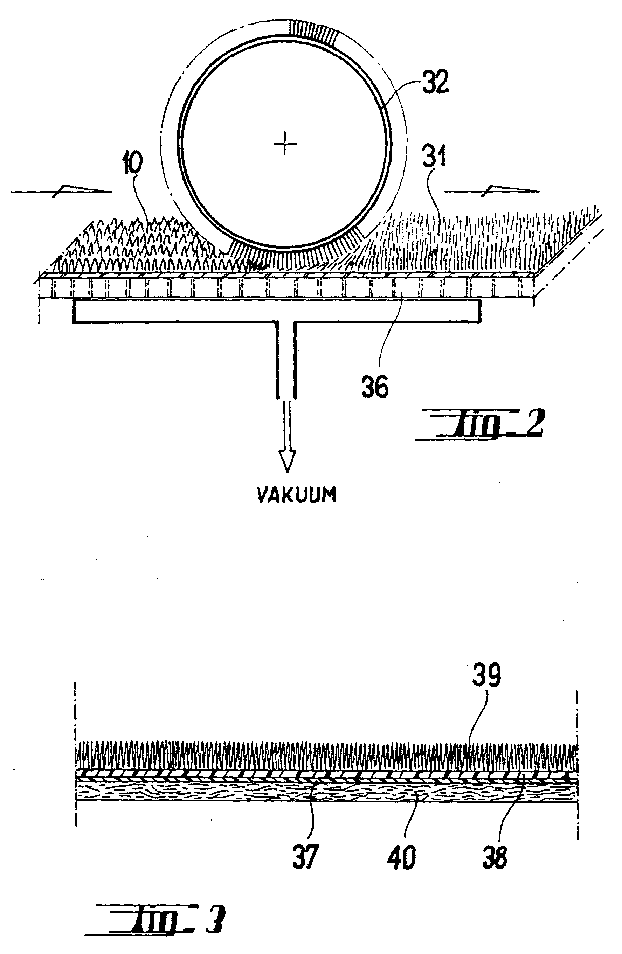

Fig. 2 zeigt eine Bearbeitungsvariante, bei dem das Zwischenerzeugnis nicht auf einer Mantelfläche einer Trommel 20 bearbeitet wird, sondern auf einem Bearbeitungstisch 36, auf dem es fixiert ist.

Zunächst wird das Zwischenerzeugnis 10 mit relativ kurzen, stämmigen Noppen oder Vorsprüngen vorgelegt und dann mit einer Bürstenwalze 32, die mit Stahlborsten besetzt ist, bearbeitet. Es erfolgt auch hier ein Längen und Strecken der Vorsprünge des ursprünglichen Flors um wenigstens das Zweifache der Ursprungslänge, so daß ein auf wenigstens einer Seite faserartig strukturiertes Halbzeug 31 erzeugt wird. Dabei wird, um übermäßige Zugkräfte zu vermeiden, das Material rapportartig vorgefahren und jeweils die Walze über das im Arbeitsprozeß stehende Material gefahren. Auch hier können sukzessive mehrere Rauh-, Bürsten- und Strichwalzen nacheinander einwirken.

Fig. 3 zeigt in vergrößerter Darstellung ein folienartiges Halbzeug, das nach dem beschrieben Verfahren hergestellt ist und aus drei Schichten besteht. Eine hochviskose und mechanisch feste Substratschicht 37 aus HDPE ist auf ihrer Oberseite belegt mit einer Polypropylenschicht 38, die nach dem vorbeschriebenen Verfahren mit einem Haarfaser-Flor 39 versehen ist. Die Dicke der verformten Schicht 38 beträgt etwa 20 bis 30 µm, während die Substratschicht 37 eine Dicke von 30 bis 40 µm hat.

Die Substratschicht 37 aus HDPE wiederum ist mit einer Vliesschicht 40 verklebt, wobei das Material insgesamt perforiert ist (Perforationen 41), so daß beide Seiten des folienarigen Halbzeugs weichflorig und wasseraufnahmefähig sind und ein Dampf- oder Wasseraustausch von einer Seite zur anderen Seite der Folie stattfinden kann.

Mit Hilfe von Strichwalzen, wie sie aus dem Stand der Technik bekannt sind, kann das folienartige Halbzeug auch ein bestimmter Strich, das heißt eine Faserausrichtung in bestimmten Richtungen, auch in wechselnden Richtungen, verliehen werden.

Andere Bearbeitungen anstelle mit Bürsten sind ebenfalls möglich. Mit Rakeln, die auf die Noppen drücken und sie Langziehen, kann ebenfalls ein Effekt hervorgerufen werden, der die Noppen zu Haarfasern längt.

Allgemein handelt es sich um Vorrichtungen, die ein Quetschen, das heißt Halten der Vorsprünge an ihrer Wurzel, und ein gleichzeitiges Längen des oberhalb der Wurzel liegenden, frei endenden Bereiches der Vorsprünge ermöglichen.

Als charakteristische Herstellungsvarianten seien zwei Beispiele genannt:

### Beispiel 1:

Auf einer Mehrfachdüsenanlage mit mindestens zwei Extrudern wird eine Folienkombination erzeugt, die aus einer zu verformenden Oberfolie in einer Stärke von 25 µm ñ 2 µm und einer Trägerfolie von 30 bis 40 µm Dicke besteht. Das Polymer für die 20 µm starke Oberschicht besteht aus 30 Teilen eines HDDPE-Materials mit einem Schmelzindex von 30 (gemessen bei 190° C/2,16 kg) und einer Dichte von 0.902 g/cm3 und 70 Teilen eines HDDPE mit einem Schmelzindex von 30 und einer Dichte von 0,885 g/cm3.

Die Trägerfolie wird hergestellt aus einem HDDPE normaler Beschaffenheit, optimiert für die Weich-PE-Folienherstellung mit einer Dichte von 0,930 g/cm3 und einem Schmelzindex von 2,1 (190° C/2,16 kg).

Auf einer Matrixwalze 4 wird diese Kombination aus dem Extruder ausgetragen und die verformbare Oberschicht direkt in Kontakt mit der Matrixwalze gebracht. Die Luft wird aus den Kavitäten der Matrixwalze nach innen herausgepreßt und die weiche, fließende Polymerschicht füllt die Kavitäten aus.

Nach dem Abkühlen wird das Zwischenerzeugnis von der Matrixwalze 4 abgezogen. Es entsteht eine Folie, die entsprechend mit je zwei Rauhbürstenwalzen der beschriebenen Art und einer Kämmwalze bearbeitet wird. Es ergibt sich ein mit einem langen Flor besetztes folienartiges Halbzeug.

### Beispiel 2:

Auf einer Zweiextruderanlage wird eine Folie von 60 µm erzeugt, wobei die verformbare Oberschicht der Folie eine Stärke von 20 µm ñ 2 µm und die Trägerschicht eine Stärke von 40 µm ( 5 µm hat. Für die Oberfolie wird ein Gemisch aus zwei Polymeren unterschiedlicher Dichte ausgewählt. Es handelt sich um zwei nach dem Matallocen-Verfahren hergestellte HDDPE-Produkte, die unter dem Markennamen Insite-PE-Plastomer von der DOW-Chemical angeboten werden. Die Mischung besteht aus 30 Teilen Affinity HM 1100 mit einem Schmelzindex von 18 (190° C/2,16 kg /10 min) und 70 Teilen eines Affinity HM 1250 mit einem Schmelzindex von 30 mit einer Dichte von 0,885 g/cm3. Für die Trägerfolie wird ein HDDPE eingesetzt, das einen Schmelzindex von 2,1 besitzt und eine Dichte von 0,920 g/cm3 aufweist.

Der Folie werden zusätzlich Gleitmittel, Pigmente, Stabilisatoren und Trennmittel in einem Gehalt bis zu 10 Gew.-% beigefügt.

Die Folie wird nach dem sogenannten Chill-roll-Verfahren hergestellt. Die Folie wird auf einem Tisch bearbeitet und ergibt nach zweimaligem Durchgang einer Rauhwalze einen dichten, vliesartigen Flor.

Das gemäß Beschreibung und Beispielen hergestellte folienartige Halbzeug eignet sich für verschiedenste Anwendungszwekke. Insbesondere wird eine solche Folie für Hygieneprodukte verwendet; jedoch auch in der Täschnerei und Konfektion lassen sich derartige Folien verwenden.

Sie lassen sich auch als Möbelbezugsstoff und in der Autopolsterei einsetzen. In Kombination mit geeigneten Trägerstoffen lassen sich Materialien für den Bekleidungssektor, für die Polstermöbelindustrie, für Himmelstoffe bei Automobilen und für Bespannstoffe und dergl. nennen, so daß ein breites Anwendungsspektrum gegeben ist.

Die Folien können eine oder mehrere Schichten aufweisen. Es lassen sich auch beidseitig velourartig aufgerauhte Oberflächen herstellen. Das Material läßt sich mit verschiedenen anderen Materialien kaschieren und bekleben. Auch eine Dränfolie mit außenseitig glatten Flächen und einer Mittelschicht aus faserigem Material läßt sich aus zwei Folien zusammenschweißen.

## Patentansprüche

1. Verfahren zur Herstellung eines oberflächenstrukturierten, folienartigen Halbzeugs (31) aus einem Thermoplasten, mit folgenden Verfahrensschritten:
- ein thermoplastisches Kunststoffmaterial wird in geschmolzenem Zustand oder in Form einer Folie auf eine in ihrer Temperatur einstellbare, gegenüber der erwünschten Struktur als Negativstruktur (Matrix (5)) ausgearbeitete Oberfläche (5) mit feinen Kavitäten, insbesondere Bohrungen, aufgebracht,
- die Matrix (5) einschließlich der Kavitäten wird vom thermoplastischen Kunststoffmaterial wenigstens teilweise ausgefüllt,
- das verformte thermoplastische Kunststoffmaterial wird durch Abkühlung zum Erstarren gebracht, wobei es auf der mit der Oberfläche in Kontakt gebrachten Seite die entsprechende Flächenstruktur annimmt,
- nach dem Erstarren wird das Kunststoffmaterial von der Oberfläche abgezogen, wobei das in die Kavitäten eingebrachte und aus diesen herausgezogene thermoplastische Material einen aus Vorsprüngen bestehenden Flor (12) bildet,
**dadurch gekennzeichnet, daß**
die den Flor (12) bildenden Vorsprünge durch Kämmen, Bürsten, Rakeln und/oder Scherquetschen gereckt werden und dabei im Mittel die Länge der Vorsprünge des Flors um wenigstens das Zweifache der Ursprungslänge vergrößert wird und ein auf wenigstens einer Seite faserartig strukturiertes Halbzeug (31) entsteht, bei dem die Vorsprünge zu Haarfasern gelängt sind.

2. Verfahren nach Anspruch 1, **dadurch gekennzeichnet, daß** die Oberfläche von außen oder von innen her einem Unterdruck ausgesetzt, so daß die zu der Matrix (5) gehörenden Kavitäten evakuiert werden und das in die Kavitäten gelangende Kunststoffmaterial besser fließt.

3. Verfahren nach Anspruch 1 oder 2, **dadurch gekennzeichnet, daß** die Länge der Vorsprünge und Noppen vor dem Recken und Längen zwischen 80 und 140 *µ*m bei einem Faserdurchmesser von wenigstens 40 *µ*m beträgt.

4. Verfahren nach Anspruch 1 bis 3, **dadurch gekennzeichnet, daß** die Besetzungsdichte an Vorsprüngen bzw. Haarfasern zwischen 3.000 und 20.000 Stück pro cm² ist.

5. Verfahren nach wenigstens einem der vorhergehenden Ansprüche, **dadurch gekennzeichnet, daß** das Kämmen oder Bürsten mit Hilfe einer oder mehrerer Kratzrauhwalzen (22) oder mit wenigstens einer Bürstenwalze und einer zu dieser nachgeschalteten Kämmwalze (24, 26) geschieht.

6. Verfahren nach wenigstens einem der vorhergehenden Ansprüche, **dadurch gekennzeichnet, daß** das Kämmen, Bürsten, Rakeln und/oder Scherquetschen in Bezug auf ein Kunststoffmaterial geschieht, das auf der Oberfläche einer Trommel (20) oder auf einer ebenen Oberfläche fixiert ist.

7. Verfahren nach wenigstens einem der vorhergehenden Ansprüche, **dadurch gekennzeichnet, daß** nach dem Kämmen, Bürsten, Rakeln und/oder Scherquetschen die gestreckten Haarfasern durch Bürsten mit einer Weichbürste aufgelockert werden.

8. Verfahren nach wenigstens einem der vorhergehenden Anspcüche, **dadurch gekennzeichnet, daß** das Kämmen, Bürsten, Rakeln und/oder Scherquetschen bei einer Temperatur zwischen 20 und 120°C, jedoch unterhalb der Schmelztemperatur des Halbzeugs (31), durchgeführt wird.

9. Verfahren nach Anspruch 7, **dadurch gekennzeichnet, daß** vor dem Kämmen, Bürsten, Rakeln und/oder Scherquetschen der Flor (12) an den Vorsprüngen mit Aviviermitteln behandelt wird.

10. Verfahren nach wenigstens einem der vorhergehenden Ansprüche, **dadurch gekennzeichnet, daß** als Thermoplast ein solcher ausgewählt aus der Gruppe Polyolefine, Polyester, Polyvinyalkohole, Polyurethane, Polyätherester, Polyamide, Polyesteramide, sowie Mischungen oder Copolymerisate daraus, verwendet wird.

11. Vorrichtung zur Durchführung des Verfahrens nach Anspruch 1 und ggf. weiteren Ansprüchen, mit einer in ihrer Temperatur einstellbaren Matrixoberfläche, die eine mit zahlreichen Kavitäten besetzte Struktur aufweist,
**dadurch gekennzeichnet,**
**daß** der Vorrichtung mit der Matrixoberfläche, z.B. der Walze (4), eine mit einer Arbeitsoberfläche versehene Vorrichtung nachgeschaltet ist, auf der das Halbzeug (31) derart fixierbar ist, daß die mit dem Faserflor zu bedeckende Seite des Halbzeugs freiliegt, und daß zum Kämmen, Bürsten, Rakeln und/oder Scherquetschen dienende Arbeitsvorrichtungen, wie Rauhkratzen, Kämmwalzen, Bürstenwalzen und dergl., im Bereich der Arbeitsoberfläche angeordnet sind, mit denen die Haarfaser herstellbar ist.

12. Vorrichtung nach Anspruch 11, **dadurch gekennzeichnet, daß** die Arbeitsoberfläche zylindrisch ist und auf der Außenseite einer Trommel (20), vorzugsweise einer mit zahlreichen Öffnungen versehenen Vakuumtrommel, angeordnet ist.

13. Vorrichtung nach Anspruch 11, **dadurch gekennzeichnet, daß** als Bürstenwalzen rotierende, mit Stahlborsten oder -zungen besetzte Walzen oder Strichwalzen eingesetzt sind.

14. Folienhalbzeug oder Produkt, insbesondere Hygieneprodukt, mit Haarfasern, hergestellt als Mono- oder Multilayerprodukt, wobei die Haarfasern aus um wenigstens das Zwei-fache der Ursprungslänge gereckte Vorsprünge entstanden sind.

15. Folienhalbzeug oder Produkt nach Anspruch 14, bestehend aus zwei Schichten, **dadurch gekennzeichnet, daß** die mit Flor (12) versehene Schicht aus einem in der Wärme leichter fließenden Polymer und die Rückseitenschicht aus einem hochviskoseren Polymer besteht.

16. Folienhalbzeug oder Produkt mit einem Faserflor (12) nach Anspruch 14, **dadurch gekennzeichnet, daß** die Haarfasern ein nach einem Metallocen-Verfahren hergestelltes Polymeraufweisen.

17. Folienhalbzeug oder Produkt mit einem Faserflor (12) nach Anspruch 14, **dadurch gekennzeichnet, daß** die dem Faserflor (12) abgewandte Seite mit einem Trägermaterial, beispielsweise Gewebe, Gewirke oder Vliesstoff, verbunden ist.

18. Folienhalbzeug oder Produkt mit einem Faserflor (12) nach Anspruch 14, **dadurch gekennzeichnet, daß** die Haarfasern aus einem Gemisch aus zumindest zwei Polymeren unterschiedlicher Dichte aufgebaut sind.

## Claims

1. A method of producing a surface-structured sheet-like semifinished product (31) from a thermoplastic, with the following steps:
- a thermoplastic material in the molten state or in the form of a sheet is placed on an adjustable-temperature surface (5) with fine cavities, particularly bores, and formed with a matrix (5) structure which is a negative of the desired structure,
- the matrix (5) including the cavities is at least partly filled with the thermoplastic material,
- the shaped thermoplastic material is solidified by cooling, the side brought into contact with the surface acquiring the corresponding surface structure, and
- after solidification the plastic material is drawn off the surface, the thermoplastic material inserted into the cavities and withdrawn therefrom forming a nap (12) consisting of projections,
**characterised in that**
the projections forming the nap (12) are stretched by combing, brushing, wiping and/or transverse squeezing, thus increasing the length of the nap projections by an average of at least twice the original length, and a semifinished product (31) having a fibrous structure on at least one side is formed, the projections being lengthened into hair fibres.

2. A method according to claim 1, **characterised in that** the surface is externally or internally subjected to a negative pressure, so that the cavities belonging to the matrix (5) are evacuated and the plastic entering the cavities flows better.

3. A method according to claim 1 or 2, **characterised in that** the length of the projections and knops before stretching and lengthening is between 80 and 140 µm, the fibre diameter being at least 40 µm.

4. A method according to claims 1 to 3, **characterised in that** the density of projections or hair fibres is between 3000 and 20000 per cm².

5. A method according to at least one of the preceding claims, **characterised in that** combing or brushing is effected by one or more scratching and roughening rollers (22) or at least one brush roller followed by a combing roller (24, 26).

6. A method according to at least one of the preceding claims, **characterised in that** combing, brushing, wiping and/or transverse squeezing is effected with reference to a plastic material fixed to the surface of a drum (20) or to a flat surface.

7. A method according to at least one of the preceding claims, **characterised in that** after combing, brushing, wiping and/or transverse squeezing, the stretched hair fibres are loosened by brushing with a soft brush.

8. A method according to at least one of the preceding claims, **characterised in that** combing, brushing, wiping and/or transverse squeezing are effected at a temperature between 20 and 120°C but below the melting temperature of the semifinished product (31).

9. A method according to claim 7, **characterised in that** before combing, brushing, wiping and/or transverse squeezing the projections on the nap (12) are treated with brightening agents.

10. A method according to at least one of the preceding claims, **characterised in that** the thermoplastic is selected from the group comprising polyolefins, polyesters, polyvinyl alcohols, polyurethanes, polyether esters, polyamides, polyester amides and mixtures or copolymers thereof.

11. A device for working the method according to claim 1 and other claims as appropriate, comprising an adjustable-temperature matrix surface having a structure occupied by numerous cavities, **characterised in that** the device or e.g. roller (4) having the matrix surface is followed by a device having a working surface on which the semifinished product (31) can be fixed so that the side of the semifinished product for covering with the fibrous nap is exposed, and working devices for combing, brushing, wiping and/or transverse squeezing, e.g. rough scrapers, combing rollers, brush rollers and the like, are disposed in the region of the working surface for producing the hair fibres.

12. A device according to claim 11, **characterised in that** the working surface is cylindrical and is disposed on the outside of a drum (20), preferably a vacuum drum formed with numerous openings.

13. A device according to claim 11, **characterised by** use of rollers or nap rollers in the form of rotating brush rollers covered with steel brushes or tongues.

14. A semifinished sheet or product, particularly a hygienic product, comprising hair fibres and produced in one or more layers, wherein the hair fibres are made from projections stretched by at least twice the original length.

15. A semifinished sheet or product according to claim 14 comprising two layers, **characterised in that** the layer with the nap (12) is made from a polymer which flows more easily when heated whereas the rear layer is made of a highly viscous polymer.

16. A semifinished sheet or product having a fibrous nap (12) according to claim 14, **characterised in that** the hair fibres comprise a polymer made by a metallocen process.

17. A semifinished sheet or product having a fibrous nap (12) according to claim 14, **characterised in that** the side remote from the fibrous nap (12) is connected to a substrate material, e.g. a woven or knitted fabric or a nonwoven.

18. A semifinished sheet or product comprising a fibrous nap (12) according to claim 14, **characterised in that** the hair fibres are made from a mixture of at least two polymers of different density.

## Revendications

1. Procédé de fabrication d'un produit semi-fini (31) de type en feuille, à surface structurée, à partir d'une matière thermoplastique, **caractérisé en ce qu'**il comprend les étapes consistant à:
- appliquer une matière plastique thermoplastique à l'état fondu ou sous forme de feuille sur une surface (5) réglable en température, réalisée sous forme de structure négative (matrice) (5) par rapport à la structure souhaitée et comportant de fines cavités, en particulier des alésages,
- remplir de la matière plastique thermoplastique au moins partiellement la matrice (5), y compris les cavités,
- solidifier par refroidissement la matière plastique thermoplastique formée, ce qui confère la structure superficielle correspondante au côté amené au contact de la surface,
- enlever de la surface la matière plastique après solidification, la matière thermoplastique introduite dans les cavités et extraite de celles-ci formant une couche pelucheuse (12) formée d'un voile de saillies,
**caractérisé en ce que** les saillies qui forment la couche pelucheuse, ou voile (12), sont étirées par peignage, brossage, raclage et/ou serrage à cisaillement et que la longueur des saillies du voile est accrue en moyenne au moins du double de la longueur d'origine et qu'il en résulte, au moins sur un côté, un produit semi-fini structuré (31) du type fibreux, dans lequel les saillies sont allongées en fibres d'aspect capillaire.

2. Procédé selon la revendication 1, **caractérisé en ce que** la surface est exposée de l'extérieur ou de l'intérieur à une dépression, de sorte que les cavités qui appartiennent à la matrice (5) sont évacuées et que la matière plastique qui parvient dans les cavités y coule mieux.

3. Procédé selon la revendication 1 ou 2, **caractérisé en ce que** la longueur des saillies et des boutons avant l'étirage et l'allongement est comprise entre 80 et 140 µm et leur diamètre est alors au moins de 40 µm.

4. Procédé selon l'une des revendications 1 à 3, **caractérisé en ce que** la densité de garnissage en saillies ou fibres d'aspect capillaire est comprise entre 3.000 et 20.000 éléments par cm².

5. Procédé selon l'une quelconque des revendications précédentes, **caractérisé en ce que** le peignage ou le brossage s'effectue au moyen d'un ou plusieurs cylindres de piquage (22) du type grattage ou au moyen d'au moins un cylindre de brossage et d'un cylindre de peignage (24, 26) monté en aval de celui-ci.

6. Procédé selon l'une quelconque des revendications précédentes, **caractérisé en ce que** le peignage, le brossage, le raclage et/ou le serrage à cisaillement sont effectués sur une matière plastique qui est fixée sur la surface d'un tambour (20) ou sur une surface plane.

7. Procédé selon l'une quelconque des revendications précédentes, **caractérisé en ce que** les fibres d'aspect capillaire sont démêlées par brossage au moyen d'une brosse douce, après le peignage, le brossage, le raclage et/ou le serrage à cisaillement.

8. Procédé selon l'une quelconque des revendications précédentes, **caractérisé en ce que** le peignage, le brossage, le raclage et/ou le serrage à cisaillement sont effectués à une température comprise entre 20 et 120°C, mais inférieure à la température de fusion du produit semi-fini (31).

9. Procédé selon la revendication 7, **caractérisé en ce que** le voile (12) est traité aux saillies à l'aide d'agents d'avivage, avant le peignage, le brossage, le raclage et/ou le serrage à cisaillement,

10. Procédé selon l'une quelconque des revendications précédentes, **caractérisé en ce que** la matière thermoplastique utilisée est sélectionnée dans le groupe constitué par les polyoléfines, les polyesters, les alcools polyvinyliques, le polyuréthanne, les esters de polyéthers, les polyamides, les polyesteramides, ainsi que des mélanges ou des copolymères de ceux-ci.

11. Dispositif de mise en oeuvre du procédé selon la revendication 1 et éventuellement selon l'une quelconque des revendications suivantes, comprenant une surface de matrice réglable en température qui comporte une structure peuplée de nombreuses cavités,
**caractérisé en ce que**, en aval du dispositif à surface matricielle, par exemple du cylindre (4), est installé un dispositif à surface de travail sur lequel le produit semi-fini (31) peut être fixé d'une manière telle que le côté qui doit être revêtu du voile de fibres du produit semi-fini est mis à découvert, et **en ce que** les dispositifs de travail qui servent au peignage, au brossage, au raclage et/ou au serrage à cisaillement, par exemple des cylindres de piquage, des cylindres de peignage, des cylindres de brossage et similaires, au moyen desquels les fibres d'aspect capillaire peuvent être fabriquées, sont agencés dans la zone de la surface de travail.

12. Dispositif selon la revendication 11, **caractérisé en ce que** la surface de travail est cylindrique et qu'un tambour (20), de préférence un tambour de vide comportant de nombreuses ouvertures est agencé sur le côté extérieur.

13. Dispositif selon la revendication 11, **caractérisé en ce que** les cylindres de brossage sont des cylindres garnis de brosses ou de languettes d'acier ou des cylindres à rebrousse-poil.

14. Produit semi-fini en feuilles ou produit, en particulier produit hygiénique, à fibres d'aspect capillaire, fabriqué sous forme de produit à couche unique ou à couches multiples, dans lequel les fibres d'aspect capillaire résultent de saillies étirées au moins au double de la longueur d'origine.

15. Produit semi-fini en feuille ou produit selon la revendication 14, composé de deux couches, **caractérisé en ce que** la couche pelucheuse (12) se compose d'un polymère léger fluant plus facilement à la chaleur et la couche du côté arrière se compose d'un polymère à viscosité plus élevée.

16. Produit semi-fini en feuille ou produit selon la revendication 14 comportant une couche pelucheuse (12) de fibres, **caractérisé en ce que** les fibres d'aspect capillaire comportent un polymère fabriqué selon un procédé par alliage organométallique.

17. Produit semi-fini en feuille ou produit comportant une couche pelucheuse (12) de fibres selon la revendication 14, **caractérisé en ce que** le côté opposé à la couche pelucheuse (12) de fibres est lié à une matière support, par exemple un tissu, un tricot ou une étoffe nattée.

18. Produit semi-fini en feuille ou produit à voile (12) de fibres selon la revendication 14, **caractérisé en ce que** les fibres d'aspect capillaire consistent en un mélange d'au moins deux polymères de densités différentes.
